# EUROPEAN PATENT SPECIFICATION

(11) **EP 3 073 206 B1**
(45) Date of publication and mention of the grant of the patent: **14.12.2022**
(21) Application number: 14856357.0
(22) Date of filing: 10.09.2014
(51) Int. Cl.: F24F 3/14, F24F 11/00

(54) **CONTROL METHOD AND CONTROL DEVICE FOR DEHUMIDIFIER AND DEHUMIDIFIER**
STEUERUNGSVERFAHREN UND STEUERUNGSVORRICHTUNG FÜR EINEN ENTFEUCHTER UND ENTFEUCHTER
PROCÉDÉ DE COMMANDE ET DISPOSITIF DE COMMANDE POUR DÉSHUMIDIFICATEUR, ET DÉSHUMIDIFICATEUR

(30) Priority: 23.10.2013 CN 201310505296
(43) Date of publication of application: 28.09.2016
(73) Proprietor: Gree Electric Appliances, Inc. of Zhuhai, Qianshan Zhuhai Guangdong 519070 (CN)
(72) Inventor: LIU, Wei, Zhuhai Guangdong 519070 (CN); LIANG, Yongchao, Zhuhai Guangdong 519070 (CN); LI, Peili, Zhuhai Guangdong 519070 (CN); YU, Ding, Zhuhai Guangdong 519070 (CN); GAO, Yuping, Zhuhai Guangdong 519070 (CN); CHEN, Pengyu, Zhuhai Guangdong 519070 (CN); LUO, Yonghong, Zhuhai Guangdong 519070 (CN); CHEN, Zuqing, Zhuhai Guangdong 519070 (CN); PENG, Qiyang, Zhuhai Guangdong 519070 (CN); WANG, Chun, Zhuhai Guangdong 519070 (CN); YANG, Jianqun, Zhuhai Guangdong 519070 (CN)
(74) Representative: Zacco GmbH
(86) International application number: PCT/CN2014/086246
(87) International publication number: WO 2015/058593

(56) References cited:
- CN-U- 202 648 053
- GB-A- 2 060 945
- JP-A- H0 861 752
- JP-A- 2003 240 309
- JP-A- 2005 195 285
- KR-A- 20030 060 005
- KR-A- 20050 044 162
- US-A- 4 869 073
- US-A1- 2011 185 751

## Description

### Technical field of the invention

The invention relates to the field of dehumidifier control, and in particular to a dehumidifier control method and apparatus, and a dehumidifier.

### Background of the invention

Dehumidifiers on the current market do not have over-load intelligent protection logics fundamentally. A conventional dehumidifier may perform only over-load protection on a compressor. In a dehumidifier product, as a system will stop due to protection only when the compressor is under a severe running condition (high exhaust and large current), the dehumidifier product will still run under severe working conditions that the compressor is not over-loaded, an outlet air temperature is relatively high and a condensing pressure is relatively high. Thus, the life of the product will be obviously shortened, and the reliability of the product will be obviously reduced. If the product is used in some special environments, for example in a wardrobe, at this time, serious potential safety hazards will be even caused.

The conventional dehumidifier product only has a stop protection function namely a compressor over-load protection function, so that before over-load protection, the service life of the product under the severe working conditions is obviously shortened, the reliability of the product is obviously reduced, and serious potential safety hazards will be even caused.

An effective solution has not been proposed for the problems currently.

D1 (GB2060945A) provides respective technical solution; however, the above mentioned problem still remains unsolved.

### Summary of the invention

The embodiments of the invention provide a dehumidifier control method as claimed in claim 1 and a dehumidifier control apparatus as claimed in claim 6, and a dehumidifier as claimed in claim 10, which are intended to at least solve the technical problems of low stability and safety of a dehumidifier caused by the fact that the dehumidifier working under a severe working condition cannot be protected.

Furthermore, the first temperature range may be 0 DEG C to 32.5 DEG C; when the first temperature range is 0 DEG C to 30.5 DEG C, the first humidity range may be 0% to 100%; and when the first temperature range is 30.5 DEG C to 32.5 DEG C, the first humidity range may be 0% to 65%. The second temperature range may be 30.5 DEG C to 34.5 DEG C; when the second temperature range is 30.5 DEG C to 32.5 DEG C, the second humidity range may be 65% to 95%; and when the second temperature range is 32.5 DEG C to 34.5 DEG C, the second humidity range may be 0% to 65%. The third temperature range may be 30.5 DEG C to 36.5 DEG C; when the third temperature range is 30.5 DEG C to 34.5 DEG C, the third humidity range may be 65% to 95%; and when the third temperature range is 34.5 DEG C to 36.5 DEG C, the third humidity range may be 0% to 100%. The fourth temperature range may be 36.5 DEG C to 39 DEG C, and the fourth humidity range may be 0% to 100%.

The step that the running mode corresponding to the working condition is obtained may include that: when the working condition is the medium-temperature and medium-humidity working condition, the fan running mode corresponding to the medium-temperature and medium-humidity working condition is read from the pre-set database, the fan running mode referring to shifting a current wind gear of a fan to a high wind gear or a top gear, the high wind gear being a wind gear at which a wind speed is higher than that at the current wind gear, and the top gear being a wind gear corresponding to a maximum wind speed of the fan.

The step that the running mode corresponding to the working condition is obtained may include that: when the working condition is the high-temperature and high-humidity working condition, the fan running mode and the compressor running mode corresponding to the high-temperature and high-humidity working condition are read from the pre-set database, the fan running mode referring to shifting the current wind gear of the fan to the high wind gear or the top gear, the high wind gear being the wind gear at which the wind speed is higher than that at the current wind gear, the top gear being the wind gear corresponding to the maximum wind speed of the fan, and the compressor running mode being a running mode of controlling a compressor to start, run for a pre-set starting time, stop for a pre-set stopping time and then start.

Furthermore, the step that the dehumidifier is controlled to work under the running mode may include that: running time is read from the pre-set database; and the dehumidifier is controlled to work under the running mode.

The first obtaining sub-module may be configured to read, when the working condition is the medium-temperature and medium-humidity working condition, the fan running mode corresponding to the medium-temperature and medium-humidity working condition from the pre-set database, the fan running mode referring to shifting a current wind gear of a fan to a high wind gear or a top gear, the high wind gear being a wind gear at which a wind speed is higher than that at the current wind gear, and the top gear being a wind gear corresponding to a maximum wind speed of the fan.

The first obtaining sub-module may be configured to read, when the working condition is the high-temperature and high-humidity working condition, the fan running mode and the compressor running mode corresponding to the high-temperature and high-humidity working condition from the pre-set database, the fan running mode referring to shifting the current wind gear of the fan to the high wind gear or the top gear, the high wind gear being the wind gear at which the wind speed is higher than that at the current wind gear, the top gear being the wind gear corresponding to the maximum wind speed of the fan, and the compressor running mode being a running mode of controlling a compressor to start, run for a pre-set starting time, stop for a pre-set stopping time and then start.

Furthermore, the control module may include: a reading module, configured to read running time from the pre-set database; and a control sub-module, configured to control the dehumidifier to work under the running mode.

According to another aspect of the embodiments of the invention, a dehumidifier is also provided, which includes a dehumidifier control apparatus accordint to any one of claims 6 to 9.

In the embodiments of the invention, by means of the invention, after the environment temperature parameter and the environment humidity parameter of the dehumidifier are collected, the running mode of the dehumidifier can be determined according to the environment temperature parameter and the environment humidity parameter, and the dehumidifier is controlled to work under the running mode corresponding to the environment temperature parameter and the environment humidity parameter. That is, by means of the invention, the working mode of the dehumidifier can be controlled according to a working environment of the dehumidifier, different running working conditions are set, and different running modes are selected according to different working conditions to improve the safety and reliability of the dehumidifier, thereby solving the technical problems in the conventional art of low stability and safety of the dehumidifier caused by the fact that the dehumidifier working under the severe working condition cannot be protected, intelligently controlling the dehumidifier under various different environment conditions, improving the stability of the dehumidifier, effectively reducing an outlet air temperature and a system reliability fault under an over-load condition, and effectively preventing the compressor from being damaged due to frequent over-load protection under the severe condition.

### Brief description of the drawings

The drawings described here are intended to provide further understanding of the invention, and form a part of the invention. The schematic embodiments and descriptions of the invention are intended to explain the invention which is defined by the claims.

In the drawings:
Fig. 1 is a diagram of a dehumidifier control apparatus according to an embodiment of the invention;
Fig. 2 is a diagram of a working condition type of a dehumidifier according to an embodiment of the invention; and
Fig. 3 is a flowchart of a dehumidifier control method according to an embodiment of the invention.

### Detailed description of the embodiments

In order to make those skilled in the art better understand the solutions of the invention, the technical solutions in the embodiments of the invention are clearly and completely described below with reference to the drawings in the embodiments of the invention.

It is important to note that the description and claims of the invention and terms "first", "second" and the like in the drawings are intended to distinguish similar objects, and do not need to describe a specific sequence or a precedence order. It should be understood that data used in such a way can be exchanged under appropriate conditions, in order that the embodiments of the invention described here can be implemented in a sequence except sequences graphically shown or described here. In addition, terms "include" and "have" and any inflexions thereof are intended to cover non-exclusive inclusions. For example, it is not limited for processes, methods, systems, products or devices containing a series of steps or units to clearly show those steps or units, and other steps or units which are not clearly shown or are inherent to these processes, methods, products or devices may be included instead.

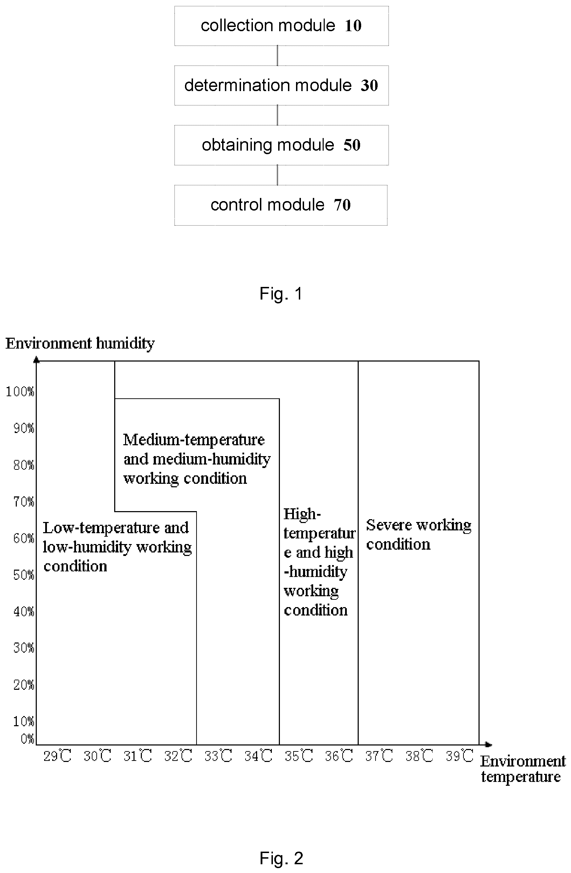

According to an embodiment of the invention, a dehumidifier control apparatus for a dehumidifier is provided. As shown in Fig. 1, the apparatus may include: a collection module 10, configured to collect an environment temperature parameter and an environment humidity parameter of a dehumidifier; a determination module 30, configured to determine a working condition of the dehumidifier according to the environment temperature parameter and the environment humidity parameter; an obtaining module 50, configured to obtain a running mode corresponding to the working condition; and a control module 70, configured to control the dehumidifier to work under the running mode.

By means of the invention, after the collection module collects the environment temperature parameter and the environment humidity parameter of the dehumidifier, the running mode of the dehumidifier can be determined via the determination module and the obtaining module according to the environment temperature parameter and the environment humidity parameter, and the control module controls the dehumidifier to work under the running mode corresponding to the environment temperature parameter and the environment humidity parameter. That is, by means of the invention, the working mode of the dehumidifier can be controlled according to the working environment of the dehumidifier, thereby solving the technical problems in the conventional art of low stability and safety of the dehumidifier caused by the fact that the dehumidifier working under the severe working condition cannot be protected, intelligently controlling the dehumidifier under various different environment conditions, improving the stability of the dehumidifier, effectively reducing the outlet air temperature and the system reliability fault under the over-load condition, and effectively preventing the compressor from being damaged due to frequent over-load protection under the severe condition.

In the embodiment of the invention, the determination module 30 may include: a first confirmation module, configured to confirm, when the environment temperature parameter is within a first temperature range and the environment humidity parameter is within a first humidity range, the working condition as a low-temperature and low-humidity working condition; a second confirmation module, configured to confirm, when the environment temperature parameter is within a second temperature range and the environment humidity parameter is within a second humidity range, the working condition as a medium-temperature and medium-humidity working condition; a third confirmation module, configured to confirm, when the environment temperature parameter is within a third temperature range and the environment humidity parameter is within a third humidity range, the working condition as a high-temperature and high-humidity working condition; and a fourth confirmation module, configured to confirm, when the environment temperature parameter is within a fourth temperature range and the environment humidity parameter is within a fourth humidity range, the working condition as a severe working condition.

Specifically, as shown in Fig. 2, the first temperature range may be 0 DEG C to 32.5 DEG C; when the first temperature range is 0 DEG C to 30.5 DEG C, the first humidity range may be 0% to 100%; and when the first temperature range is 30.5 DEG C to 32.5 DEG C, the first humidity range may be 0% to 65%. The second temperature range may be 30.5 DEG C to 34.5 DEG C; when the second temperature range is 30.5 DEG C to 32.5 DEG C, the second humidity range may be 65% to 95%; and when the second temperature range is 32.5 DEG C to 34.5 DEG C, the second humidity range may be 0% to 65%. The third temperature range may be 30.5 DEG C to 36.5 DEG C; when the third temperature range is 30.5 DEG C to 34.5 DEG C, the third humidity range may be 65% to 95%; and when the third temperature range is 34.5 DEG C to 36.5 DEG C, the third humidity range may be 0% to 100%. The fourth temperature range may be 36.5 DEG C to 39 DEG C, and the fourth humidity range may be 0% to 100%.

According to the embodiment of the invention, the running mode may include a fan running mode and a compressor running mode. The obtaining module 50 may include: a first obtaining sub-module, configured to obtain, when the working condition is the low-temperature and low-humidity working condition, a fan setting mode and a compressor setting mode of a user, and take the fan setting mode and the compressor setting mode as the fan running mode and the compressor running mode; a second obtaining sub-module, configured to obtain, when the working condition is the medium-temperature and medium-humidity working condition, the compressor setting mode, take the compressor setting mode as the compressor running mode, and read the fan running mode corresponding to the medium-temperature and medium-humidity working condition from a pre-set database; a third obtaining sub-module, configured to read, when the working condition is the high-temperature and high-humidity working condition, the fan running mode and the compressor running mode corresponding to the high-temperature and high-humidity working condition from the pre-set database; and a fourth obtaining sub-module, configured to determine, when the working condition is the severe working condition, the fan running mode and the compressor running mode as stop modes.

Furthermore, the running mode may include the fan running mode and the compressor running mode. The first obtaining sub-module may be configured to read, when the working condition is the medium-temperature and medium-humidity working condition, the fan running mode corresponding to the medium-temperature and medium-humidity working condition from the pre-set database, the fan running mode referring to shifting a current wind gear of a fan to a high wind gear or a top gear, the high wind gear being a wind gear at which a wind speed is higher than that at the current wind gear, and the top gear being a wind gear corresponding to a maximum wind speed of the fan.

Furthermore, the running mode may include the fan running mode and the compressor running mode. The first obtaining sub-module may be configured to read, when the working condition is the high-temperature and high-humidity working condition, the fan running mode and the compressor running mode corresponding to the high-temperature and high-humidity working condition from the pre-set database, the fan running mode referring to shifting the current wind gear of the fan to the high wind gear or the top gear, the high wind gear being the wind gear at which the wind speed is higher than that at the current wind gear, the top gear being the wind gear corresponding to the maximum wind speed of the fan, and the compressor running mode being a running mode of controlling a compressor to start, run for a pre-set starting time, stop for a pre-set stopping time and then start.

Table 1 shows the fan running mode and the compressor running mode corresponding to each working condition and beneficial effects corresponding to different running modes. Specifically, the fan running mode corresponding to the medium-temperature and medium-humidity working condition may be a "forced high wind gear", the fan running mode corresponding to the high-temperature and high-humidity working condition may also be a "forced high wind gear", and the compressor running mode corresponding to the high-temperature and high-humidity working condition may be "START for 8 minutes, STOP for 4 minutes".

**Table 1**

| | Fan running mode | Compressor running mode | Effect |
|---|---|---|---|
| Low-temper ature and low-humid it y working condition | Fan setting mode | Compressor setting mode | The dehumidifier can safely run according to a setting mode of a user by using the running mode under this working condition. |
| Medium-te mperature and medium-hu midity working condition | Forced high wind gear | Compressor setting mode | The dehumidifier can safely run according to the compressor setting mode of the user by using the running mode under this working condition, and by adjusting the fan running mode to the high wind gear, the heat exchange effect of the dehumidifier is good, and the load of the compressor is alleviated. |
| High-tempe rature and high-humidit y working condition | Forced high wind gear | START for 8 minutes, STOP for 4 minutes | The dehumidifier cannot continuously run under this working condition, the compressor is prevented from frequent over-load protection by setting fixed start-stop time for the dehumidifier, and the start time and the stop time can be adjusted in the embodiment and can be read from the pre-set database without limitations to 8 minutes and 4 minutes. |
| Severe working condition | Stop mode | | It is hardly necessary to use the dehumidifier for dehumidification under this working condition, and the dehumidifier is set as the stop mode under this working condition in order to prevent a potential safety hazard and a product reliability fault. |

Furthermore, the control module 70 may include: a reading module, configured to read running time from the pre-set database; and a control sub-module, configured to control the dehumidifier to work under the running mode.

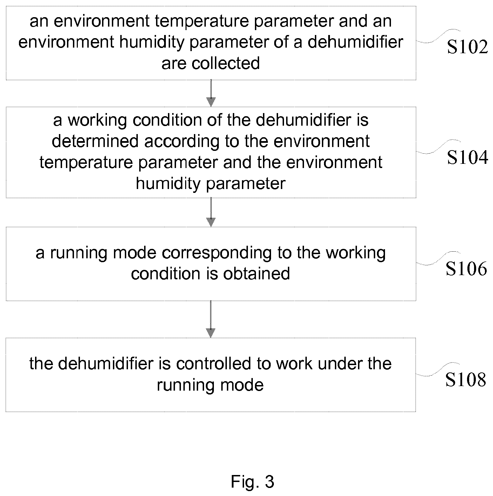

According to an embodiment of the invention, a dehumidifier control method is provided. As shown in Fig. 3, the method may include the steps as follows.
Step S102: An environment temperature parameter and an environment humidity parameter of a dehumidifier are collected.
Step S104: A working condition of the dehumidifier is determined according to the environment temperature parameter and the environment humidity parameter.
Step S106: A running mode corresponding to the working condition is obtained.
Step S108: The dehumidifier is controlled to work under the running mode.

By means of the invention, after the environment temperature parameter and the environment humidity parameter of the dehumidifier are collected, the running mode of the dehumidifier can be determined according to the environment temperature parameter and the environment humidity parameter, and the dehumidifier is controlled to work under the running mode corresponding to the environment temperature parameter and the environment humidity parameter. That is, by means of the invention, the working mode of the dehumidifier can be controlled according to the working environment of the dehumidifier, different running working conditions are set, and different running modes are selected according to different working conditions to improve the safety and reliability of the dehumidifier, thereby solving the technical problems in the conventional art of low stability and safety of the dehumidifier caused by the fact that the dehumidifier working under the severe working condition cannot be protected, intelligently controlling the dehumidifier under various different environment conditions, improving the stability of the dehumidifier, effectively reducing the outlet air temperature and the system reliability fault under the over-load condition, and effectively preventing the compressor from being damaged due to frequent over-load protection under the severe condition.

Furthermore, the step that the working condition of the dehumidifier is determined according to the environment temperature parameter and the environment humidity parameter includes that: when the environment temperature parameter is within a first temperature range and the environment humidity parameter is within a first humidity range, the working condition is confirmed as a low-temperature and low-humidity working condition; when the environment temperature parameter is within a second temperature range and the environment humidity parameter is within a second humidity range, the working condition is confirmed as a medium-temperature and medium-humidity working condition; when the environment temperature parameter is within a third temperature range and the environment humidity parameter is within a third humidity range, the working condition is confirmed as a high-temperature and high-humidity working condition; and when the environment temperature parameter is within a fourth temperature range and the environment humidity parameter is within a fourth humidity range, the working condition is confirmed as a severe working condition.

Specifically, as shown in Fig. 2, the first temperature range may be 0 DEG C to 32.5 DEG C; when the first temperature range is 0 DEG C to 30.5 DEG C, the first humidity range may be 0% to 100%; and when the first temperature range is 30.5 DEG C to 32.5 DEG C, the first humidity range may be 0% to 65%. The second temperature range may be 30.5 DEG C to 34.5 DEG C; when the second temperature range is 30.5 DEG C to 32.5 DEG C, the second humidity range may be 65% to 95%; and when the second temperature range is 32.5 DEG C to 34.5 DEG C, the second humidity range may be 0% to 65%. The third temperature range may be 30.5 DEG C to 36.5 DEG C; when the third temperature range is 30.5 DEG C to 34.5 DEG C, the third humidity range may be 65% to 95%; and when the third temperature range is 34.5 DEG C to 36.5 DEG C, the third humidity range may be 0% to 100%. The fourth temperature range may be 36.5 DEG C to 39 DEG C, and the fourth humidity range may be 0% to 100%.

According to the embodiment of the invention, the running mode may include a fan running mode and a compressor running mode. The step that the running mode corresponding to the working condition is obtained may include that: when the working condition is the low-temperature and low-humidity working condition, a fan setting mode and a compressor setting mode of a user are obtained, and the fan setting mode and the compressor setting mode are taken as the fan running mode and the compressor running mode; when the working condition is the medium-temperature and medium-humidity working condition, the compressor setting mode is obtained, the compressor setting mode is taken as the compressor running mode, and the fan running mode corresponding to the medium-temperature and medium-humidity working condition is read from a pre-set database; when the working condition is the high-temperature and high-humidity working condition, the fan running mode and the compressor running mode corresponding to the high-temperature and high-humidity working condition are read from the pre-set database; and when the working condition is the severe working condition, the fan running mode and the compressor running mode are determined as stop modes. Specifically, the situation of the method embodiment in correspondence to the working condition can refer to Table 1 of the above-mentioned embodiment.

Furthermore, the running mode includes the fan running mode and the compressor running mode. The step that the running mode corresponding to the working condition is obtained includes that: when the working condition is the medium-temperature and medium-humidity working condition, the fan running mode corresponding to the medium-temperature and medium-humidity working condition is read from the pre-set database, the fan running mode referring to shifting a current wind gear of a fan to a high wind gear or a top gear, the high wind gear being a wind gear at which a wind speed is higher than that at the current wind gear, and the top gear being a wind gear corresponding to a maximum wind speed of the fan.

Furthermore, the running mode includes the fan running mode and the compressor running mode. The step that the running mode corresponding to the working condition is obtained includes that: when the working condition is the high-temperature and high-humidity working condition, the fan running mode and the compressor running mode corresponding to the high-temperature and high-humidity working condition are read from the pre-set database, the fan running mode referring to shifting the current wind gear of the fan to the high wind gear or the top gear, the high wind gear being the wind gear at which the wind speed is higher than that at the current wind gear, the top gear being the wind gear corresponding to the maximum wind speed of the fan, and the compressor running mode being a running mode of controlling a compressor to start, run for a pre-set starting time, stop for a pre-set stopping time and then start.

Specifically, the step that the dehumidifier is controlled to work under the running mode may include that: running time is read from the pre-set database; and the dehumidifier is controlled to work under the running mode.

By means of the descriptions of the implementation mode, those skilled in the art can clearly know that the method according to the embodiment can be realized by means of software and a necessary general hardware platform. Certainly, the method can also be realized by means of hardware. However, the former is a better implementation mode under many conditions. Based on this understanding, the technical solutions of the invention can be substantially embodied in a form of a software product or parts contributing to the conventional art can be embodied in a form of a software product, and the computer software product is stored in a storage medium such as a Read-Only Memory (ROM)/Random Access Memory (RAM), a magnetic disk and an optical disc, including a plurality of instructions enabling a terminal device which may be a mobile phone, a computer, a server or a network device to execute the method according to each embodiment of the invention.

According to another aspect of the embodiments of the invention, a dehumidifier is also provided, which includes: a dehumidifier control apparatus.

By means of the invention, after the environment temperature parameter and the environment humidity parameter of the dehumidifier are collected, the running mode of the dehumidifier can be determined according to the environment temperature parameter and the environment humidity parameter, and the dehumidifier is controlled to work under the running mode corresponding to the environment temperature parameter and the environment humidity parameter. That is, by means of the invention, the working mode of the dehumidifier can be controlled according to the working environment of the dehumidifier, different running working conditions are set, and different running modes are selected according to different working conditions to improve the safety and reliability of the dehumidifier, thereby solving the technical problems in the conventional art of low stability and safety of the dehumidifier caused by the fact that the dehumidifier working under the severe working condition cannot be protected, intelligently controlling the dehumidifier under various different environment conditions, improving the stability of the dehumidifier, effectively reducing the outlet air temperature and the system reliability fault under the over-load condition, and effectively preventing the compressor from being damaged due to frequent over-load protection under the severe condition.

From the embodiments of the invention, it can be known that the invention achieves the technical effects as follows. By means of the invention, after the environment temperature parameter and the environment humidity parameter of the dehumidifier are collected, the running mode of the dehumidifier can be determined according to the environment temperature parameter and the environment humidity parameter, and the dehumidifier is controlled to work under the running mode corresponding to the environment temperature parameter and the environment humidity parameter. That is, by means of the invention, the working mode of the dehumidifier can be controlled according to the working environment of the dehumidifier, different running working conditions are set, and different running modes are selected according to different working conditions to improve the safety and reliability of the dehumidifier, thereby solving the technical problems in the conventional art of low stability and safety of the dehumidifier caused by the fact that the dehumidifier working under the severe working condition cannot be protected, intelligently controlling the dehumidifier under various different environment conditions, improving the stability of the dehumidifier, effectively reducing the outlet air temperature and the system reliability fault under the over-load condition, and effectively preventing the compressor from being damaged due to frequent over-load protection under the severe condition.

The sequence number of the embodiments of the invention is only used for descriptions and is not representative of a preference order of the embodiments.

In the embodiments of the invention, the description of each embodiment is emphasized. A part which is not described in detail in a certain embodiment can refer to relevant descriptions of the other embodiments.

Units explained as separate parts may be or may not be separated physically. Parts displayed as units may be or may not be physical units. Namely, they may be located at a place or may be distributed on a plurality of network units. Some or all of the units can be selected according to actual requirements to achieve the aims of the solutions of the embodiments.

In addition, all function units in all embodiments of the invention can be integrated in a processing unit. Each unit can exist individually and physically, or two or more units can be integrated in a unit. The integrated unit can be realized in a form of hardware or can be realized in a form of a software function unit.

If the integrated unit is realized in a form of the software function unit or is sold or used as an independent product, the integrated unit can be stored in a computer readable storage medium. Based on this understanding, the technical solutions of the invention can be substantially embodied in a form of a software product, or parts contributing to the conventional art or all or some of the technical solutions can be embodied in a form of a software product, and the computer software product is stored in a storage medium, including a plurality of instructions enabling a computer device which may be a personal computer, a server or a network device to execute all or some of the steps of the method according to each embodiment of the invention. The storage medium includes: various media capable of storing program codes, such as a U disk, an ROM, an RAM, a mobile hard disk, a magnetic disk or an optical disc.

## Claims

1. A dehumidifier control method, comprising:
collecting an environment temperature parameter and an environment humidity parameter of a dehumidifier (S102);
determining a working condition of the dehumidifier according to the environment temperature parameter and the environment humidity parameter (S104);
obtaining a running mode corresponding to the working condition (S106); and
controlling the dehumidifier to work under the running mode (S108);
wherein determining the working condition of the dehumidifier according to the environment temperature parameter and the environment humidity parameter (S104) comprises:
confirming, when the environment temperature parameter is within a first temperature range and the environment humidity parameter is within a first humidity range, the working condition as a low-temperature and low-humidity working condition;
confirming, when the environment temperature parameter is within a second temperature range and the environment humidity parameter is within a second humidity range, the working condition as a medium-temperature and medium-humidity working condition;
confirming, when the environment temperature parameter is within a third temperature range and the environment humidity parameter is within a third humidity range, the working condition as a high-temperature and high-humidity working condition; and
confirming, when the environment temperature parameter is within a fourth temperature range and the environment humidity parameter is within a fourth humidity range, the working condition as a severe working condition;
the running mode comprises a fan running mode and a compressor running mode, and obtaining the running mode corresponding to the working condition comprises:
when the working condition is the low-temperature and low-humidity working condition, obtaining a fan setting mode and a compressor setting mode of a user, and taking the fan setting mode and the compressor setting mode as the fan running mode and the compressor running mode;
when the working condition is the medium-temperature and medium-humidity working condition, obtaining the compressor setting mode, taking the compressor setting mode as the compressor running mode, and reading the fan running mode corresponding to the medium-temperature and medium-humidity working condition from a pre-set database;
when the working condition is the high-temperature and high-humidity working condition, reading the fan running mode and the compressor running mode corresponding to the high-temperature and high-humidity working condition from the pre-set database; and
when the working condition is the severe working condition, determining the fan running mode and the compressor running mode as stop modes.

2. The control method according to claim 1, wherein
the first temperature range is 0 DEG C to 32.5 DEG C, when the first temperature range is 0 DEG C to 30.5 DEG C, the first humidity range is 0% to 100%, and when the first temperature range is 30.5 DEG C to 32.5 DEG C, the first humidity range is 0% to 65%;
the second temperature range is 30.5 DEG C to 34.5 DEG C, when the second temperature range is 30.5 DEG C to 32.5 DEG C, the second humidity range is 65% to 95%, and when the second temperature range is 32.5 DEG C to 34.5 DEG C, the second humidity range is 0% to 65%;
the third temperature range is 30.5 DEG C to 36.5 DEG C, when the third temperature range is 30.5 DEG C to 34.5 DEG C, the third humidity range is 65% to 95%, and when the third temperature range is 34.5 DEG C to 36.5 DEG C, the third humidity range is 0% to 100%; and
the fourth temperature range is 36.5 DEG C to 39 DEG C, and the fourth humidity range is 0% to 100%.

3. The control method according to claim 1, wherein the running mode comprises the fan running mode and the compressor running mode, and obtaining the running mode corresponding to the working condition comprises:
when the working condition is the medium-temperature and medium-humidity working condition, reading the fan running mode corresponding to the medium-temperature and medium-humidity working condition from the pre-set database, the fan running mode referring to shifting a current wind gear of a fan to a high wind gear or a top gear,
the high wind gear being a wind gear at which a wind speed is higher than that at the current wind gear, and the top gear being a wind gear corresponding to a maximum wind speed of the fan.

4. The control method according to claim 1, wherein the running mode comprises the fan running mode and the compressor running mode, and obtaining the running mode corresponding to the working condition comprises:
when the working condition is the high-temperature and high-humidity working condition, reading the fan running mode and the compressor running mode corresponding to the high-temperature and high-humidity working condition from the pre-set database,
the fan running mode referring to shifting the current wind gear of the fan to the high wind gear or the top gear, the high wind gear being the wind gear at which the wind speed is higher than that at the current wind gear, the top gear being the wind gear corresponding to the maximum wind speed of the fan, and
the compressor running mode being a running mode of controlling a compressor to start, run for a pre-set starting time, stop for a pre-set stopping time and then start.

5. The control method according to claim 1, wherein controlling the dehumidifier to work under the running mode (S108) comprises:
reading running time from the pre-set database; and
controlling the dehumidifier to work under the running mode.

6. A dehumidifier control apparatus, comprising:
a collection module (10), configured to collect an environment temperature parameter and an environment humidity parameter of a dehumidifier;
a determination module (30), configured to determine a working condition of the dehumidifier according to the environment temperature parameter and the environment humidity parameter;
an obtaining module (50), configured to obtain a running mode corresponding to the working condition; and
a control module (70), configured to control the dehumidifier to work under the running mode;
wherein the determination module (30) comprises:
a first confirmation module, configured to confirm, when the environment temperature parameter is within a first temperature range and the environment humidity parameter is within a first humidity range, the working condition as a low-temperature and low-humidity working condition;
a second confirmation module, configured to confirm, when the environment temperature parameter is within a second temperature range and the environment humidity parameter is within a second humidity range, the working condition as a medium-temperature and medium-humidity working condition;
a third confirmation module, configured to confirm, when the environment temperature parameter is within a third temperature range and the environment humidity parameter is within a third humidity range, the working condition as a high-temperature and high-humidity working condition; and
a fourth confirmation module, configured to confirm, when the environment temperature parameter is within a fourth temperature range and the environment humidity parameter is within a fourth humidity range, the working condition as a severe working condition;
the running mode comprises a fan running mode and a compressor running mode, and the obtaining module comprises:
a first obtaining sub-module, configured to obtain, when the working condition is the low-temperature and low-humidity working condition, a fan setting mode and a compressor setting mode of a user, and take the fan setting mode and the compressor setting mode as the fan running mode and the compressor running mode;
a second obtaining sub-module, configured to obtain, when the working condition is the medium-temperature and medium-humidity working condition, the compressor setting mode, take the compressor setting mode as the compressor running mode, and read the fan running mode corresponding to the medium-temperature and medium-humidity working condition from a pre-set database;
a third obtaining sub-module, configured to read, when the working condition is the high-temperature and high-humidity working condition, the fan running mode and the compressor running mode corresponding to the high-temperature and high-humidity working condition from the pre-set database; and
a fourth obtaining sub-module, configured to determine, when the working condition is the severe working condition, the fan running mode and the compressor running mode as stop modes.

7. The control apparatus according to claim 6, wherein the running mode comprises the fan running mode and the compressor running mode, and the second obtaining sub-module comprises:
a first mode adjustment module, configured to read, when the working condition is the medium-temperature and medium-humidity working condition, the fan running mode corresponding to the medium-temperature and medium-humidity working condition from the pre-set database, the fan running mode referring to shifting a current wind gear of a fan to a high wind gear or a top gear,
the high wind gear being a wind gear at which a wind speed is higher than that at the current wind gear, and the top gear being a wind gear corresponding to a maximum wind speed of the fan.

8. The control apparatus according to claim 6, wherein the running mode comprises the fan running mode and the compressor running mode, and in the step of obtaining the running mode corresponding to the working condition,
a second mode adjustment module is configured to read, when the working condition is the high-temperature and high-humidity working condition, the fan running mode and the compressor running mode corresponding to the high-temperature and high-humidity working condition from the pre-set database,
the fan running mode referring to shifting the current wind gear of the fan to the high wind gear or the top gear, the high wind gear being the wind gear at which the wind speed is higher than that at the current wind gear, the top gear being the wind gear corresponding to the maximum wind speed of the fan, and
the compressor running mode being a running mode of controlling a compressor to start, run for a pre-set starting time, stop for a pre-set stopping time and then start.

9. The control apparatus according to claim 6, wherein the control module (70) comprises:
a reading module, configured to read running time from the pre-set database; and
a control sub-module, configured to control the dehumidifier to work under the running mode.

10. A dehumidifier, comprising a dehumidifier control apparatus according to any one of claims 6 to 9.

## Patentansprüche

1. Verfahren zur Steuerung eines Entfeuchters, umfassend:
Erfassung eines Umgebungstemperaturparameters und eines Umgebungsfeuchtigkeitsparameters eines Entfeuchters (S102);
Bestimmen eines Betriebszustands des Entfeuchters entsprechend dem Umgebungstemperaturparameter und dem Umgebungsfeuchtigkeitsparameter (S104);
Erhalten eines Betriebsmodus, der dem Betriebszustand entspricht (S106); und
Steuern des Entfeuchters zum Betreib im Betriebsmodus (S108);
wobei die Bestimmung des Betriebszustands des Entfeuchters entsprechend dem Umgebungstemperaturparameter und dem Umgebungsfeuchtigkeitsparameter (S104) umfasst:
wenn der Umgebungstemperaturparameter innerhalb eines ersten Temperaturbereichs und der Umgebungsfeuchtigkeitsparameter innerhalb eines ersten Feuchtigkeitsbereichs liegt, Bestätigen des Betriebszustands als Betriebszustand mit niedriger Temperatur und niedriger Luftfeuchtigkeit;
wenn der Umgebungstemperaturparameter innerhalb eines zweiten Temperaturbereichs und der Umgebungsfeuchtigkeitsparameter innerhalb eines zweiten Feuchtigkeitsbereichs liegt, Bestätigen des Betriebszustands als Betriebszustand mit mittlerer Temperatur und mittlerer Luftfeuchtigkeit;
wenn der Umgebungstemperaturparameter innerhalb eines dritten Temperaturbereichs und der Umgebungsfeuchtigkeitsparameter innerhalb eines dritten Feuchtigkeitsbereichs liegt, Bestätigen des Betriebszustands als Betriebszustand mit hoher Temperatur und hoher Luftfeuchtigkeit; und
wenn der Umgebungstemperaturparameter innerhalb eines vierten Temperaturbereichs und der Umgebungsfeuchtigkeitsparameter innerhalb eines vierten Feuchtigkeitsbereichs liegt, Bestätigen des Betriebszustands als schwerer Betriebszustand;
wobei der Betriebsmodus einen Gebläsebetriebsmodus und einen Kompressorbetriebsmodus umfasst, und das Erhalten des Betriebsmodus, der dem Betriebszustand entspricht, umfasst:
wenn der Betriebszustand der Betriebszustand mit niedriger Temperatur und niedriger Luftfeuchtigkeit ist, Erhalten eines Gebläseeinstellmodus und eines Kompressoreinstellmodus eines Benutzers, und Übernehmen des Gebläseeinstellmodus und des Kompressoreinstellmodus als Gebläsebetriebsmodus und Kompressorbetriebsmodus;
wenn der Betriebszustand der Betriebszustand mit mittlerer Temperatur und mittlerer Luftfeuchtigkeit ist, Erhalten des Kompressoreinstellmodus, Übernehmen des Kompressoreinstellmodus als Kompressorbetriebsmodus und Lesen des Gebläsebetriebsmodus, der dem Betriebszustand mit mittlerer Temperatur und mittlerer Luftfeuchtigkeit entspricht, aus einer voreingestellten Datenbank;
wenn der Betriebszustand der Betriebszustand mit hoher Temperatur und hoher Luftfeuchtigkeit ist, Lesen des Gebläsebetriebsmodus und des Kompressorbetriebsmodus, die dem Betriebszustand mit hoher Temperatur und Luftfeuchtigkeit entsprechen, aus der voreingestellten Datenbank; und
wenn der Betriebszustand der schwere Betriebszustand ist, Bestimmen des Gebläsebetriebsmodus und des Kompressorbetriebsmodus als Stoppmodi.

2. Verfahren zur Steuerung nach Anspruch 1, wobei
der erste Temperaturbereich 0°C bis 32,5°C beträgt, wenn der erste Temperaturbereich 0°C bis 30,5°C beträgt, der erste Feuchtigkeitsbereich 0% bis 100% beträgt, und wenn der erste Temperaturbereich 30,5°C bis 32,5°C beträgt, der erste Feuchtigkeitsbereich 0% bis 65% beträgt;
der zweite Temperaturbereich 30,5°C bis 34,5°C beträgt, wenn der zweite Temperaturbereich 30,5°C bis 32,5°C beträgt, der zweite Feuchtigkeitsbereich 65% bis 95% beträgt, und wenn der zweite Temperaturbereich 32,5°C bis 34,5°C beträgt, der zweite Feuchtigkeitsbereich 0% bis 65% beträgt;
der dritte Temperaturbereich 30,5°C bis 36,5°C beträgt, wenn der dritte Temperaturbereich 30,5°C bis 34,5°C beträgt, der dritte Feuchtigkeitsbereich 65% bis 95% beträgt, und wenn der dritte Temperaturbereich 34,5°C bis 36,5°C beträgt, der dritte Feuchtigkeitsbereich 0% bis 100% beträgt; und
der vierte Temperaturbereich 36,5°C bis 39°C beträgt, und der vierte Feuchtigkeitsbereich 0% bis 100% beträgt.

3. Verfahren zur Steuerung nach Anspruch 1, wobei der Betriebsmodus den Gebläsebetriebsmodus und den Kompressorbetriebsmodus umfasst, und das Erhalten des Betriebsmodus, der dem Betriebszustand entspricht, umfasst:
wenn der Betriebszustand der Betriebszustand mit mittlerer Temperatur und mittlerer Luftfeuchtigkeit ist, Lesen des Gebläsebetriebsmodus, der dem Betriebszustand mit mittlerer Temperatur und mittlerer Luftfeuchtigkeit entspricht, aus der voreingestellten Datenbank, wobei sich der Gebläsebetriebsmodus auf das Umschalten eines aktuellen Windgangs eines Gebläses auf einen hohen Windgang oder einen höchsten Gang bezieht,
wobei der hohe Windgang ein Windgang ist, bei dem eine Windgeschwindigkeit höher ist als bei dem aktuellen Windgang, und der höchste Gang ein Windgang ist, der einer maximalen Windgeschwindigkeit des Gebläses entspricht.

4. Verfahren zur Steuerung nach Anspruch 1, wobei der Betriebsmodus den Gebläsebetriebsmodus und den Kompressorbetriebsmodus umfasst, und das Erhalten des Betriebsmodus, der dem Betriebszustand entspricht, umfasst:
wenn der Betriebszustand der Betriebszustand mit hoher Temperatur und hoher Luftfeuchtigkeit ist, Lesen des Gebläsebetriebsmodus und des Kompressorbetriebsmodus, die dem Betriebszustand mit hoher Temperatur und hoher Luftfeuchtigkeit entsprechen, aus der voreingestellten Datenbank,
wobei der Gebläsebetriebsmodus sich darauf bezieht, dass der aktuelle Windgang des Gebläses auf den hohen Windgang oder den höchsten Gang geschaltet wird, wobei der hohe Windgang der Windgang ist, bei dem die Windgeschwindigkeit höher ist als bei dem aktuellen Windgang, wobei der höchste Gang der Windgang ist, der der maximalen Windgeschwindigkeit des Gebläses entspricht, und
wobei der Kompressorbetriebsmodus ein Betriebsmodus ist, bei dem ein Kompressor so gesteuert wird, dass er startet, für eine voreingestellte Startzeit läuft, für eine voreingestellte Stoppzeit stoppt und dann startet.

5. Verfahren zur Steuerung nach Anspruch 1, wobei das Steuern des Entfeuchters zum Betrieb im Betriebsmodus (S108) umfasst:
Lesen der Laufzeit aus der voreingestellten Datenbank; und
Steuern des Entfeuchters zum Betrieb im Betriebsmodus.

6. Vorrichtung zur Steuerung eines Entfeuchters, umfassend:
ein Erfassungsmodul (10), das so konfiguriert ist, dass es einen Umgebungstemperaturparameter und einen Umgebungsfeuchtigkeitsparameter eines Entfeuchters erfasst;
ein Bestimmungsmodul (30), das so konfiguriert ist, dass es einen Betriebszustand des Entfeuchters entsprechend dem Umgebungstemperaturparameter und dem Umgebungsfeuchtigkeitsparameter bestimmt;
ein Erhaltungsmodul (50), das so konfiguriert ist, dass es einen Betriebsmodus, der dem Betriebszustand entspricht, erhält; und
ein Steuermodul (70), das so konfiguriert ist, dass es den Entfeuchter zum Betrieb im Betriebsmodus steuert;
wobei das Bestimmungsmodul (30) umfasst:
ein erstes Bestätigungsmodul, das so konfiguriert ist, dass es, wenn der Umgebungstemperaturparameter innerhalb eines ersten Temperaturbereichs liegt und der Umgebungsfeuchtigkeitsparameter innerhalb eines ersten Feuchtigkeitsbereichs liegt, den Betriebszustand als Betriebszustand mit niedriger Temperatur und niedriger Luftfeuchtigkeit bestätigt;
ein zweites Bestätigungsmodul, das so konfiguriert ist, dass es, wenn der Umgebungstemperaturparameter innerhalb eines zweiten Temperaturbereichs liegt und der Umgebungsfeuchtigkeitsparameter innerhalb eines zweiten Feuchtigkeitsbereichs liegt, den Betriebszustand als Betriebszustand mit mittlerer Temperatur und mittlerer Luftfeuchtigkeit bestätigt;
ein drittes Bestätigungsmodul, das so konfiguriert ist, dass es, wenn der Umgebungstemperaturparameter innerhalb eines dritten Temperaturbereichs liegt und der Umgebungsfeuchtigkeitsparameter innerhalb eines dritten Feuchtigkeitsbereichs liegt, den Betriebszustand als Betriebszustand mit hoher Temperatur und hoher Luftfeuchtigkeit bestätigt; und
ein viertes Bestätigungsmodul, das so konfiguriert ist, dass es, wenn der Umgebungstemperaturparameter innerhalb eines vierten Temperaturbereichs liegt und der Umgebungsfeuchtigkeitsparameter innerhalb eines vierten Feuchtigkeitsbereichs liegt, den Betriebszustand als schweren Betriebszustand bestätigt;
der Betriebsmodus einen Gebläsebetriebsmodus und einen Kompressorbetriebsmodus umfasst, und das Erhaltungsmodul umfasst:
ein erstes Erhaltungsuntermodul, das so konfiguriert ist, dass es, wenn der Betriebszustand der Betriebszustand mit niedriger Temperatur und niedriger Luftfeuchtigkeit ist, einen Gebläseeinstellmodus und einen Kompressoreinstellmodus eines Benutzers erhält und den Gebläseeinstellmodus und den Kompressoreinstellmodus als Gebläsebetriebsmodus und Kompressorbetriebsmodus übernimmt;
ein zweites Erhaltungsuntermodul, das so konfiguriert ist, dass es, wenn der Betriebszustand der Betriebszustand mit mittlerer Temperatur und mittlerer Luftfeuchtigkeit ist, den Kompressoreinstellmodus erhält, den Kompressoreinstellmodus als Kompressorbetriebsmodus übernimmt und den Gebläsebetriebsmodus, der dem Betriebszustand mit mittlerer Temperatur und mittlerer Luftfeuchtigkeit entspricht, aus einer voreingestellten Datenbank liest;
ein drittes Erhaltungsuntermodul, das so konfiguriert ist, dass es, wenn der Betriebszustand der Betriebszustand mit hoher Temperatur und hoher Luftfeuchtigkeit ist, den Gebläsebetriebsmodus und den Kompressorbetriebsmodus, die dem Betriebszustand mit hoher Temperatur und hoher Luftfeuchtigkeit entsprechen, aus der voreingestellten Datenbank liest; und
ein viertes Erhaltungsuntermodul, das so konfiguriert ist, dass es, wenn der Betriebszustand der schwere Betriebszustand ist, den Gebläsebetriebsmodus und den Kompressorbetriebsmodus als Stoppmodi bestimmt.

7. Vorrichtung zur Steuerung nach Anspruch 6, wobei der Betriebsmodus den Gebläsebetriebsmodus und den Kompressorbetriebsmodus umfasst, und das zweite Erhaltungsuntermodul umfasst:
ein erstes Betriebsart-Einstellmodul, das so konfiguriert ist, dass es, wenn der Betriebszustand der Betriebszustand mit mittlerer Temperatur und mittlerer Luftfeuchtigkeit ist, den Gebläsebetriebsmodus, der dem Betriebszustand mit mittlerer Temperatur und mittlerer Luftfeuchtigkeit entspricht, aus der voreingestellten Datenbank ausliest, wobei sich der Gebläsebetriebsmodus darauf bezieht, dass ein aktueller Windgang eines Gebläses auf einen hohen Windgang oder einen höchsten Gang geschaltet wird,
wobei der hohe Windgang ein Windgang ist, bei dem eine Windgeschwindigkeit höher ist als bei dem aktuellen Windgang, und der höchste Gang ein Windgang ist, der einer maximalen Windgeschwindigkeit des Gebläses entspricht.

8. Vorrichtung zur Steuerung nach Anspruch 6, wobei der Betriebsmodus den Gebläsebetriebsmodus und den Kompressorbetriebsmodus umfasst, und im Schritt des Erhaltens des Betriebsmodus, der dem Betriebszustand entspricht, ein zweites Betriebsart-Einstellmodul so konfiguriert ist, dass es, wenn der Betriebszustand der Betriebszustand mit hoher Temperatur und Luftfeuchtigkeit ist, den Gebläsebetriebsmodus und den Kompressorbetriebsmodus, die dem Betriebszustand mit hoher Temperatur und hoher Luftfeuchtigkeit entsprechen, aus der voreingestellten Datenbank liest,
wobei der Gebläsebetriebsmodus sich darauf bezieht, dass der aktuelle Windgang des Gebläses auf den hohen Windgang oder den höchsten Gang geschaltet wird, wobei der hohe Windgang der Windgang ist, bei dem die Windgeschwindigkeit höher ist als bei dem aktuellen Windgang, wobei der höchste Gang der Windgang ist, der der maximalen Windgeschwindigkeit des Gebläses entspricht, und
wobei der Kompressorbetriebsmodus ein Betriebsmodus ist, bei dem ein Kompressor so gesteuert wird, dass er startet, für eine voreingestellte Startzeit läuft, für eine voreingestellte Stoppzeit stoppt und dann startet.

9. Vorrichtung zur Steuerung nach Anspruch 6, wobei das Steuermodul (70) umfasst:
ein Lesemodul, das so konfiguriert ist, dass es die Laufzeit aus der voreingestellten Datenbank liest; und
ein Steueruntermodul, das so konfiguriert ist, dass es den Entfeuchter zum Betrieb im Betriebsmodus steuert.

10. Entfeuchter, umfassend eine Vorrichtung zur Steuerung eines Entfeuchters nach einem der Ansprüche 6 bis 9.

## Revendications

1. Procédé de commande d'un déshumidificateur, comprenant les étapes consistant à :
récupérer un paramètre de température d'environnement et un paramètre d'humidité d'environnement d'un déshumidificateur (S102) ;
déterminer une condition de fonctionnement du déshumidificateur en fonction du paramètre de température d'environnement et du paramètre d'humidité d'environnement (S104) ;
obtenir un mode de fonctionnement correspondant à la condition de fonctionnement (S106) ; et
commander le déshumidificateur pour qu'il fonctionne dans la condition de fonctionnement (S108) ;
dans lequel la détermination de la condition de fonctionnement du déshumidificateur en fonction du paramètre de température d'environnement et du paramètre d'humidité d'environnement (S104) comprend les étapes consistant à :
confirmer, lorsque le paramètre de température d'environnement se trouve dans une première plage de température et que le paramètre d'humidité d'environnement se trouve dans une première plage d'humidité, la condition de fonctionnement en tant que condition de fonctionnement à basse température et à faible humidité ;
confirmer, lorsque le paramètre de température d'environnement se trouve dans une deuxième plage de température et que le paramètre d'humidité d'environnement se trouve dans une deuxième plage d'humidité, la condition de fonctionnement en tant que condition de fonctionnement à température moyenne et à humidité moyenne ;
confirmer, lorsque le paramètre de température d'environnement se trouve dans une troisième plage de température et que le paramètre d'humidité d'environnement se trouve dans une troisième plage d'humidité, la condition de fonctionnement en tant que condition de fonctionnement à température élevée et à humidité élevée ; et
confirmer, lorsque le paramètre de température d'environnement se trouve dans une quatrième plage de température et que le paramètre d'humidité d'environnement se trouve dans une quatrième plage d'humidité, la condition de fonctionnement en tant que condition de fonctionnement sévère ;
dans lequel le mode de fonctionnement comprend un mode de fonctionnement de ventilateur et un mode de fonctionnement de compresseur, et l'obtention du mode de fonctionnement correspondant à la condition de fonctionnement comprend les étapes consistant à :
lorsque la condition de fonctionnement est la condition de fonctionnement à basse température et à faible humidité, obtenir un mode de réglage de ventilateur et un mode de réglage de compresseur d'un utilisateur, et prendre le mode de réglage de ventilateur et le mode de réglage de compresseur en tant que mode de fonctionnement de ventilateur et mode de fonctionnement de compresseur ;
lorsque la condition de fonctionnement est la condition de fonctionnement à température moyenne et à humidité moyenne, obtenir le mode de réglage de compresseur, prendre le mode de réglage de compresseur en tant que mode de fonctionnement de compresseur, et lire le mode de fonctionnement de ventilateur correspondant à la condition de fonctionnement à température moyenne et à humidité moyenne à partir d'une base de données prédéfinie ; ;
lorsque la condition de fonctionnement est la condition de fonctionnement à température élevée et à humidité élevée, lire le mode de fonctionnement de ventilateur et le mode de fonctionnement de compresseur correspondant à la condition de fonctionnement à température élevée et à humidité élevée à partir de la base de données prédéfinie ; et
lorsque la condition de fonctionnement est la condition de fonctionnement sévère, déterminer le mode de fonctionnement du ventilateur et le mode de fonctionnement du compresseur en tant que modes d'arrêt.

2. Procédé selon la revendication 1, dans lequel
la première plage de température est de 0°C à 32,5°C, lorsque la première plage de température est de 0°C à 30,5°C, la première plage d'humidité est de 0% à 100%, et lorsque la première plage de température est de 30,5°C à 32,5°C, la première plage d'humidité est de 0% à 65%;
la deuxième plage de température est de 30,5°C à 34,5°C, lorsque la deuxième plage de température est de 30,5°C à 32,5°C, la deuxième plage d'humidité est de 65% à 95%, et lorsque la deuxième plage de température est de 32,5°C à 34,5°C, la deuxième plage d'humidité est de 0% à 65% ;
la troisième plage de température est de 30,5°C à 36,5°C, lorsque la troisième plage de température est de 30,5°C à 34,5°C, la troisième plage d'humidité est de 65% à 95%, et lorsque la troisième plage de température est de 34,5°C à 36,5°C, la troisième plage d'humidité est de 0% à 100% ; et
la quatrième plage de température est de 36,5°C à 39°C, et la quatrième plage d'humidité est de 0% à 100%.

3. Procédé de commande selon la revendication 1, dans lequel le mode de fonctionnement comprend le mode de fonctionnement de ventilateur et le mode de fonctionnement de compresseur, et l'obtention du mode de fonctionnement correspondant à la condition de fonctionnement comprend les étapes consistant à :
lorsque la condition de fonctionnement est la condition de fonctionnement à température moyenne et à humidité moyenne, lire le mode de fonctionnement de ventilateur correspondant à la condition de fonctionnement à température moyenne et à humidité moyenne à partir de la base de données prédéfinie, le mode de fonctionnement de ventilateur faisant référence au passage d'un engrenage à vent actuel d'un ventilateur vers un engrenage à vent élevé ou un engrenage supérieur,
l'engrenage à vent élevé étant un engrenage à vent auquel une vitesse de vent est supérieure à celle au niveau de l'engrenage à vent actuel, et l'engrenage supérieur étant un engrenage à vent correspondant à une vitesse de vent maximale du ventilateur.

4. Procédé de commande selon la revendication 1, dans lequel le mode de fonctionnement comprend le mode de fonctionnement de ventilateur et le mode de fonctionnement de compresseur, et l'obtention du mode de fonctionnement correspondant à la condition de fonctionnement comprend les étapes consistant à :
lorsque la condition de fonctionnement est la condition de fonctionnement à température élevée et à humidité élevée, lire le mode de fonctionnement de ventilateur et le mode de fonctionnement de compresseur correspondant à la condition de fonctionnement à température élevée et à humidité élevée à partir de la base de données prédéfinie,
le mode de fonctionnement de ventilateur se référant au passage de l'engrenage à vent actuel du ventilateur vers l'engrenage à vent élevé ou l'engrenage supérieur, l'engrenage à vent élevé étant l'engrenage à vent auquel la vitesse de vent est supérieure à celle au niveau de l'engrenage à vent actuel, l'engrenage supérieur étant l'engrenage à vent correspondant à la vitesse de vent maximale du ventilateur, et
le mode de fonctionnement de compresseur étant un mode de fonctionnement de commande d'un compresseur pour démarrer, fonctionner pendant un temps de démarrage prédéfini, s'arrêter pendant un temps d'arrêt prédéfini et puis démarrer.

5. Procédé de commande selon la revendication 1, dans lequel la commande du déshumidificateur pour fonctionner dans le mode de fonctionnement (S108) comprend les étapes consistant à :
lire le temps de fonctionnement à partir de la base de données prédéfinie ; et
commander le déshumidificateur pour qu'il fonctionne dans la condition de fonctionnement.

6. Dispositif de commande de déshumidificateur, comprenant :
un module de collecte (10) configuré pour récupérer un paramètre de température d'environnement et un paramètre d'humidité d'environnement d'un déshumidificateur ;
un module de détermination (30) configuré pour déterminer une condition de fonctionnement du déshumidificateur en fonction du paramètre de température d'environnement et du paramètre d'humidité d'environnement ;
un module d'obtention (50) configuré pour obtenir un mode de fonctionnement correspondant à la condition de fonctionnement ; et
un module de commande (70) configuré pour commander le déshumidificateur pour qu'il fonctionne dans la condition de fonctionnement :
dans lequel le module de détermination (30) comprend :
un premier module de confirmation configuré pour confirmer, lorsque le paramètre de température d'environnement se trouve dans une première plage de température et que le paramètre d'humidité d'environnement se trouve dans une première plage d'humidité, la condition de fonctionnement en tant que condition de fonctionnement à basse température et à faible humidité ;
un deuxième module de confirmation configuré pour confirmer, lorsque le paramètre de température d'environnement se trouve dans une deuxième plage de température et que le paramètre d'humidité d'environnement se trouve dans une deuxième plage d'humidité, la condition de fonctionnement en tant que condition de fonctionnement à température moyenne et à humidité moyenne ;
un troisième module de confirmation configuré pour confirmer, lorsque le paramètre de température d'environnement se trouve dans une troisième plage de température et que le paramètre d'humidité d'environnement se trouve dans une troisième plage d'humidité, la condition de fonctionnement en tant que condition de fonctionnement à température élevée et à humidité élevée ; et
un quatrième module de confirmation configuré pour confirmer, lorsque le paramètre de température d'environnement se trouve dans une quatrième plage de température et que le paramètre d'humidité d'environnement se trouve dans une quatrième plage d'humidité, la condition de fonctionnement en tant que condition de fonctionnement sévère ;
dans lequel le mode de fonctionnement comprend un mode de fonctionnement de ventilateur et un mode de fonctionnement de compresseur, et le module d'obtention comprend :
un premier sous-module d'obtention configuré pour obtenir, lorsque la condition de fonctionnement est la condition de fonctionnement à basse température et à faible humidité, un mode de réglage de ventilateur et un mode de réglage de compresseur d'un utilisateur, et prendre le mode de réglage de ventilateur et le mode de réglage de compresseur en tant que mode de fonctionnement de ventilateur et mode de fonctionnement de compresseur ;
un deuxième sous-module d'obtention configuré pour obtenir, lorsque la condition de fonctionnement est la condition de fonctionnement à température moyenne et à humidité moyenne, le mode de réglage de compresseur, prendre le mode de réglage de compresseur en tant que mode de fonctionnement de compresseur, et lire le mode de fonctionnement de ventilateur correspondant à la condition de fonctionnement à température moyenne et à humidité moyenne à partir d'une base de données prédéfinie ; ;
un troisième sous-module d'obtention configuré pour lire, lorsque la condition de fonctionnement est la condition de fonctionnement à température élevée et à humidité élevée, le mode de fonctionnement de ventilateur et le mode de fonctionnement de compresseur correspondant à la condition de fonctionnement à température élevée et à humidité élevée à partir de la base de données prédéfinie ; et
un quatrième sous-module d'obtention configuré pour déterminer, lorsque la condition de fonctionnement est la condition de fonctionnement sévère, le mode de fonctionnement du ventilateur et le mode de fonctionnement du compresseur en tant que modes d'arrêt.

7. Dispositif de commande selon la revendication 6, dans lequel le mode de fonctionnement comprend le mode de fonctionnement de ventilateur et le mode de fonctionnement de compresseur, et le deuxième mode d'obtention comprend :
un premier module d'ajustement de mode, configuré pour lire, lorsque la condition de fonctionnement est la condition de fonctionnement à température moyenne et à humidité moyenne, le mode de fonctionnement de ventilateur correspondant à la condition de fonctionnement à température moyenne et à humidité moyenne à partir de la base de données prédéfinie, le mode de fonctionnement de ventilateur faisant référence au passage d'un engrenage à vent actuel d'un ventilateur vers un engrenage à vent élevé ou un engrenage supérieur,
l'engrenage à vent élevé étant un engrenage à vent auquel une vitesse de vent est supérieure à celle au niveau de l'engrenage à vent actuel, et l'engrenage supérieur étant un engrenage à vent correspondant à une vitesse de vent maximale du ventilateur.

8. Dispositif de commande selon la revendication 6, dans lequel le mode de fonctionnement comprend le mode de fonctionnement de ventilateur et le mode de fonctionnement de compresseur, et dans l'étape d'obtention du mode de fonctionnement correspondant à la condition de fonctionnement :
un deuxième module d'ajustement de mode est configuré pour lire, lorsque la condition de fonctionnement est la condition de fonctionnement à température élevée et à humidité élevée, le mode de fonctionnement de ventilateur et le mode de fonctionnement de compresseur correspondant à la condition de fonctionnement à température élevée et à humidité élevée à partir de la base de données prédéfinie,
le mode de fonctionnement de ventilateur se référant au passage de l'engrenage à vent actuel du ventilateur vers l'engrenage à vent élevé ou l'engrenage supérieur, l'engrenage à vent élevé étant l'engrenage à vent auquel la vitesse de vent est supérieure à celle au niveau de l'engrenage à vent actuel, l'engrenage supérieur étant l'engrenage à vent correspondant à la vitesse de vent maximale du ventilateur, et
le mode de fonctionnement de compresseur étant un mode de fonctionnement de commande d'un compresseur pour démarrer, fonctionner pendant un temps de démarrage prédéfini, s'arrêter pendant un temps d'arrêt prédéfini et puis démarrer.

9. Dispositif de commande selon la revendication 6, dans lequel le module de commande (70) comprend :
un module de lecture configuré pour lire le temps de fonctionnement à partir de la base de données prédéfinie ; et
un sous-module de commande configuré pour commander le déshumidificateur pour qu'il fonctionne dans la condition de fonctionnement.

10. Déshumidificateur, comprenant un dispositif de commande de déshumidificateur selon l'une quelconque des revendications 6 à 9.
